# EUROPÄISCHE PATENTANMELDUNG

(11) **EP 4 036 399 A1**
(43) Veröffentlichungstag der Anmeldung: **03.08.2022**
(21) Anmeldenummer: 22153953.9
(22) Anmeldetag: 28.01.2022
(51) Int. Cl.: F03B 13/06, F03B 17/00, F03G 3/00

(54) **VORRICHTUNG UND VERFAHREN ZUM REVERSIBLEN SPEICHERN UND FREISETZEN VON ENERGIE**

(30) Priorität: 30.01.2021 EP 21154467
(71) Anmelder: Seilwerk Industriekletterservice Nicolas Burchardt & Susanne Kulpok GbR, 16515 Oranienburg (DE)
(72) Erfinder: BURCHARDT, Nicolas, 16515 Oranienburg (DE)
(74) Vertreter: Arth, Hans-Lothar

(57) **Zusammenfassung**

Die vorliegende Erfindung betrifft eine Vorrichtung zum reversiblen Speichern und Freisetzen von Energie in Form von elektrischer Energie. Die Vorrichtung umfasst zwei übereinander angeordnete Wasserreservoirs, zwischen denen sich zwei Wassertanks alternierend leer aufwärts und mit Wasser gefüllt abwärts bewegen, wobei durch die Abwärtsbewegung eines vollgefüllten Wassertanks ein Generator zur Stromerzeugung angetrieben wird und ein leerer Wassertank aufwärts gezogen wird. Zudem betrifft die vorliegende Erfindung ein Verfahren zur Erzeugung von elektrischer Energie.

## Beschreibung

Die vorliegende Erfindung betrifft eine Vorrichtung zum reversiblen Speichern und Freisetzen von Energie in Form von elektrischer Energie. Die Vorrichtung umfasst zwei übereinander angeordnete Wasserreservoirs, zwischen denen sich zwei Wassertanks alternierend leer aufwärts und mit Wasser gefüllt abwärts bewegen, wobei durch die Abwärtsbewegung eines vollgefüllten Wassertanks ein Generator zur Stromerzeugung angetrieben wird und ein leerer Wassertank aufwärts gezogen wird. Zudem betrifft die vorliegende Erfindung ein Verfahren zur Erzeugung von elektrischer Energie.

Die Erzeugung elektrischer Energie aus alternativen Energiequellen, insbesondere Windkraft, Wasserkraft und Solarenergie unterliegt natürlichen Schwankungen. Eine industrielle Gesellschaft kann diese alternativen Energiequellen nur dann zuverlässig nutzen, wenn diese kontinuierlich zur Verfügung stehen.

Eine Möglichkeit der kontinuierlichen Einspeisung elektrischer Energie aus alternativen Energiequellen ist die Zwischenspeicherung der Energie über einen längeren Zeitraum. Dies kann beispielsweise mit Direktspeichern oder Wasser-Pumpspeicherkraftwerken erreicht werden. Direktspeicher haben jedoch den Nachteil, dass sie hohe Speicherverluste aufweisen und sehr teuer sind. Wasser-Pumpspeicherkraftwerke können nur an begrenzten Orten (z.B. künstliche Stauseen) eingesetzt werden und sind daher beispielsweise für die Zwischenspeicherung von Offshore gewonnener Windenergie ungeeignet.

Die internationale Patentanmeldung WO 2010/080074 A1 offenbart eine Vorrichtung zum Erzeugen von Energie unter Ausnutzung der Schwerkraft. Diese Vorrichtung besteht aus zwei Wassertanks, die sich vertikal zwischen zwei Wasserreservoirs entgegengesetzt periodisch bewegen, wobei der sich nach unten bewegende Wassertank vollgefüllt ist und der sich nach oben bewegende Wassertank leer ist. Durch diese Abwärtsbewegung des gefüllten Wassertanks wird ein Rad in Drehung versetzt und ein Biegemoment erzeugt, das über ein Zahnrad am Achsenende auf den Stromgenerator übertragen wird. Beide Wassertanks besitzen ein Ventil am Boden, das sich öffnet, sobald ein Sensor detektiert, dass sich der Wassertank in der unteren Position über dem unteren Wasserreservoir befindet. Der Sensor löst zudem eine Bremse aus, um starke Zugkräfte am Wassertank aufzunehmen. Das Ventil schließt sich, sobald der Wassertank die untere Position verlässt. Gleichermaßen sind die oberen Wasserreservoirs mit Ventilen am Boden ausgestattet, um die Wassertanks zu befüllen. Ein Sensor am oberen Wasserreservoir sorgt dafür, dass das Ventil sich nur dann öffnet, wenn ein Wassertank an der oberen Position leer ist. Die Wassertanks werden über ein Hebelschloss in der oberen Position gehalten. Das Hebelschloss wird ebenfalls über einen Gewichtssensor an der unteren Position des anderen Tanks gesteuert, sodass das Hebelschloss den einen Wassertank in der oberen Position hält, sobald der andere Wassertank die untere Position erreicht und geleert wird. Sobald der untere Wassertank leer ist, löst sich die Verriegelung wieder.

Das chinesische Gebrauchsmuster CN 201155434 Y betrifft ebenso eine Vorrichtung zur Erzeugung von kinetischer Energie und elektrischer Energie mit einstellbarer Schwerkraft. Die Vorrichtung wird durch die Schwerkraft angetrieben, mit der sich ein mit Wasser gefüllter Gewichtsbehälter von der oberen Position mit einer angemessenen Geschwindigkeit abwärts bewegt, unter Verwendung eines Flaschenzugs, eines Übertragungsrades und durch eine Kupplung und einem geschwindigkeitssteigernden Zahnradsatz, um die kinetische Energie und die elektrische Energie zu erzeugen. Die Gewichtsbehälter bewegen sich entgegengesetzt periodisch vertikal zwischen zwei Wasserreservoirs, wobei der sich nach unten bewegende Gewichtsbehälter gefüllt ist und der sich nach oben bewegende Gewichtsbehälter leer ist. Eine Seitenwand der Gewichtsbehälter ist oben jeweils mit einem Druckschalter versehen, der bei Berührung ein Ventil automatisch öffnet (bei Kontakt mit dem unteren Reservoir) und schließt (bei Kontakt mit dem oberen Reservoir). Eine weitere Seitenwand der Gewichtsbehälter ist zudem mit einer Ventilöffnung ausgestattet, um die Füllmenge einstellen zu können. Bewegt sich der Behälter zu schnell nach unten, so wird über eine Computersteuerung ein Hochdruck-Luftkompressor ausgelöst, der die Bewegung der Gewichtsbehälter abbremst.

Maßgebend für die Effizienz dieser Wassertank-Anlagen ist die Befüllung und Leerung der Wassertanks an der oberen bzw. der unteren Position. Eine zu geringe Befüllung führt zu einer geringeren Energiegewinnung und eine Überbefüllung kann dazu führen, dass die Tankbewegung unter zusätzlichem Energieaufwand gebremst werden muss, wodurch die Energieerzeugung verringert wird. Die im Stand der Technik beschriebenen Halte- und Befüllungsvorrichtungen für die Wassertanks erlauben entweder keine genaue Einstellung der Füllhöhe oder müssen regelmäßig gewartet und neu justiert werden aufgrund der Vielzahl an notwendigen Sensoren zur Bestimmung der Lage der Wassertanks, zur Bestimmung des Füllstands der Wassertanks und zum Öffnen und Schließen der Ventile. Die Sensorsteuerung ist aufgrund der erforderlichen Elektronik als auch bei Verschmutzung störanfällig.

Aufgabe der vorliegenden Erfindung ist es daher, eine wartungsarme und wenig störanfällige Vorrichtung bereitzustellen, die elektrische Energie besonders effizient aus Windkraft, Solarenergie, Wasserkraft oder einer Kombination zweier oder aller drei dieser Energieformen erzeugen, (reversibel) speichern und bei Bedarf kontinuierlich wieder abgeben kann.

Diese Aufgabe wird durch die technische Lehre der unabhängigen Ansprüche der vorliegenden Erfindung gelöst. Weitere vorteilhafte Ausgestaltungen der Erfindung ergeben sich aus den abhängigen Ansprüchen, der Beschreibung sowie den Beispielen.

Die erfindungsgemäße Vorrichtung (1) zum reversiblen Speichern und Freisetzen von Energie bedient sich einem oberen Wasserreservoir (100) und einem unteren Wasserreservoir (200), wobei das obere Wasserreservoir (100) eine höhere potentielle Energie aufweist, so dass folglich zum Speichern von elektrischer Energie, Wasser aus dem unteren Wasserreservoir (200) in das obere Wasserreservoir (100) gepumpt werden kann und zum Wiedergewinn der elektrischen Energie, Wasser aus dem oberen Wasserreservoir (100) in das untere Wasserreservoir (200) transportiert werden kann.

Erfindungsgemäß erfolgt dieser Transport des Wassers aus dem oberen Wasserreservoir (100) in das untere Wasserreservoir (200) mittels zweier Wassertanks (500,550), die sich alternierend aufwärts und abwärts zwischen den Wasserreservoirs bewegen.

Während ein Wassertank am unteren Wasserreservoir entleert wird, wird der andere Wassertank am oberen Wasserreservoir befüllt. Ist der Wassertank vollgefüllt, so bewegt er sich mittels Gravitationskraft abwärts. Der leere Wassertank am unteren Wasserreservoir wird dabei aufwärts gezogen, bis er das obere Wasserreservoir erreicht und wiederrum befüllt wird. Der obere Wassertank wird mittels einer Haltevorrichtung an der obersten Position fixiert, bis der Wassertank vollgefüllt ist. Erfindungsgemäß wird die Haltevorrichtung automatisch ab einem definierten Füllstand gelöst und die Befüllung gestoppt. Dies wird erreicht, wenn der obere Wassertank eine definierte Gewichtskraft aufgrund seiner Befüllung erreicht hat. Durch die Verknüpfung der Haltevorrichtung mit der Gewichtskraft des Wassertanks werden eine optimale Befüllung des Wassertanks und damit ein effizienter Betrieb mit maximaler Energieerzeugung sichergestellt. Zudem ist so eine einfache und wartungsarme Vorrichtung realisierbar, die gänzlich auf Sensoren, wie Füllstandsensoren, Bewegungssensoren und Gewichtssensoren sowie einer elektronischen Steuerung verzichten kann. Damit ist die erfindungsgemäße Vorrichtung auch bei Dauer- und Langzeitbetrieb bemerkenswert störunanfällig und wartungsarm bis wartungsfrei. Aufgrund der exakten Befüllung des oberen Wassertanks ist auch keine zusätzliche Vorrichtung zum Abbremsen bzw. zum Verringern der Fallgeschwindigkeit erforderlich.

WO 2010/080074 A1 beschreibt eine Haltevorrichtung in Form eines Hebelschlosses, das einen Wassertank in der oberen Position hält, wenn ein Gewichtssensor an der unteren Position des anderen Wassertanks ausgelöst wird. Sobald der andere Wassertank an der unteren Position leer ist, löst sich die Verriegelung wieder und der obere Wassertank bewegt sich abwärts. Die Haltevorrichtung wird damit unabhängig vom Füllstand des oberen Wassertanks gelöst und eine optimale Befüllung ist somit nicht gewährleistet.

Beide Wassertanks sind mit einer Antriebseinheit verbunden, die wiederrum den Generator antreibt, sobald sich die Wassertanks bewegen. Die Bewegung der Wassertanks wird über die Antriebseinheit koordiniert, sodass wenn ein Wassertank am oberen Wasserreservoir ist, der andere Wassertank sich am unteren Wasserreservoir befindet. Bewegt sich ein Wassertank aufwärts, so bewegt sich der andere Wassertank abwärts. Da der sich abwärtsbewegende Wassertank immer mit Wasser gefüllt ist und der sich aufwärtsbewegende Wasser tank immer leer ist, ist ersterer schwerer als letzterer Wassertank, sodass der leere Tank aufwärts gezogen wird. Daher werden für den erfindungsgemäßen Transport des Wassertanks zum oberen Wasserreservoir keine elektrische Energie und kein Motor benötigt.

Das Befüllen und Entleeren der Wassertanks erfolgt über selbstschließende Ventile, die sich am Boden der Wassertanks und am Boden des oberen Wasserreservoirs befinden. Selbstschließende Ventile sind stets geschlossen, sofern nicht eine mechanische Kraft von unten auf sie einwirkt. Daher befinden sich auf der Oberseite der Wassertanks sowie am Boden des unteren Wasserreservoirs der erfindungsgemäßen Vorrichtung entsprechende Ventilöffnungsvorrichtungen, die eine mechanische Kraft auf die selbstschließende Ventile ausüben, wenn die Wassertanks an ihrer obersten oder untersten Position sind, sodass die Ventile geöffnet werden, und Wasser in den Wassertank oder aus den Wassertank läuft.

Für einen effizienten Betrieb der Vorrichtung ist es außerdem erforderlich, dass die Wassertanks mit dem oberen Wasserreservoir und dem unteren Wasserreservoir eine vertikale Achse bilden. Dadurch wird die Gravitationskraft bei der Abwärtsbewegung maximal ausgenutzt und es werden eventuelle Reibungsverluste minimiert. Ferner sorgt die Anordnung in einer vertikalen Achse dafür, dass die Ventile und die Ventilöffnungsvorrichtungen richtig positioniert sind, sodass die Ventile entsprechend geöffnet werden können.

Die erfindungsgemäße Vorrichtung ist daher keine Wasserkraftanlage bzw. kein Pumpspeicherkraftwerk. In einer Wasserkraftanlage wird die elektrische Energie durch einen Volumenstrom (Volumen pro Zeiteinheit) erzeugt, z.B. ein Fluss über eine Turbine. Dahingegen tritt in der vorliegenden Erfindung ein Volumenstrom nur im Speicherprozess auf, wenn das Wasser aus dem unteren Wasserreservoir mittels Pumpen- und Rohrleitungssystem in das obere Wasserreservoir befördert wird. Im Spendeprozess, d.h. wenn elektrische Energie freigesetzt wird, wird das Wasser nur in den Wassertanks bewegt. Es gibt keinen Volumenstrom. Vielmehr wird hier die Masse des Wassers zur Energiegewinnung ausgenutzt (Massewirkung).

Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

Anders formuliert betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die den ersten Wassertank (500) an der obersten Position hält, bis der erste Wassertank (500) mit einer definierten Menge an Wasser befüllt ist und eine zweite Haltevorrichtung (560), die den zweiten Wassertank (550) an der obersten Position hält, bis der zweite Wassertank (550) mit einer definierten Menge an Wasser befüllt ist,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

Da sich beim Befüllen des Wassertanks dieser bereits abwärts bewegen würde, sobald er schwerer ist als der sich entleerende Wassertank, ist es erforderlich, den zu befüllenden Wassertank an der obersten Position zu fixieren, d.h. zu halten, bis dieser eine gewünschte Füllmenge und damit ein bestimmtes Gewicht erreicht hat oder vorzugsweise vollständig gefüllt ist. Dazu ist die erfindungsgemäße Vorrichtung mit Haltevorrichtungen (520, 560) ausgestattet.

Mit anderen Worten sind die Haltevorrichtungen erfindungsgemäß so ausgestaltet, dass sie den Wassertank von der obersten Position automatisch freigeben, wenn der Wassertank ein definiertes Gewicht übersteigt, das einer Befüllung mit einer definierten Wassermenge entspricht. **Automatisch freigeben** heißt hier, dass der Wassertank sich sofort und ohne Verzögerung abwärts bewegen kann, ohne dass ein Mittel oder Teil der Vorrichtung, wie etwa ein Sensor oder eine Steuereinheit dazwischen geschaltet ist. Die Haltevorrichtungen sorgen auch für eine exakte Befüllung und damit für ein exaktes Gewicht des gefüllten Wassertanks, wodurch auch eine Überbefüllung des oberen Wassertanks verhindert wird, was wiederum zu einer konstanten Fallgeschwindigkeit führt und Mittel zum Abbremsen eines aufgrund Überbefüllung zu schnell sich abwärts bewegenden Wassertanks nicht erforderlich sind.

Anders formuliert betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position verzögerungsfrei freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position verzögerungsfrei freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

Als Haltevorrichtungen (520, 560) sind alle Arten von Haltevorrichtungen geeignet, die in der Lage sind, den Wassertank während des Befüllens an der obersten Position nur so lange zu halten, bis der Wassertank mit einer definierten Menge an Wasser oder vollständig mit Wasser befüllt ist. Die Wassertanks können dabei über verschiedene Mechanismen durch die Haltevorrichtungen an der obersten Position fixiert werden. Als ungeeignete Haltevorrichtungen haben sich u.a. Seile oder Kabel mit entsprechender Bremsvorrichtung herausgestellt, da diese den Wassertank beim Überschreiten der definierten Wasserfüllmenge nicht spontan und ungebremst freigeben können. Zudem verklemmen derartige Halterungen häufig aufgrund der Vibrationen im System. Aufgrund ihrer Störanfälligkeit auch wegen der unvermeidbaren Vibrationen der Vorrichtung haben sich Sensoren für die Dauerbetrieb und den Langzeitbetrieb als ungeeignet erwiesen, zumal diese auch wieder Strom als Energiequelle benötigen.

Als Haltevorrichtungen (520, 560) haben sich mechanische als auch magnetische Haltevorrichtungen als deutlich bevorzugt herausgestellt. Magnetische Haltevorrichtungen sind vorzugsweise permanentmagnetische, wobei elektromagnetische aber gleichgute Resultate liefern, aber zusätzlich elektrische Energie bedürfen. Die Haltevorrichtungen (520 und 560) sind in der Regel als zwei getrennte Haltevorrichtungen ausgebildet, können aber auch als eine Haltevorrichtung für beide Wassertanks ausgebildet sein, wie z.B. eine mechanische Haltevorrichtung, welche zwischen den beiden Wassertanks angeordnet ist und über ein erstes Sperrelement für den Wassertank (500) und ein zweites Sperrelement für den Wassertank (550) verfügt.

Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste mechanische oder magnetische Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite mechanische oder magnetische Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

Beispielsweise können die Wassertanks mechanisch mit einem Widerstand gehalten werden. Dieser Widerstand kann als Kontergewicht (523,563) ausgestaltet sein. Eine Ausführungsform der vorliegenden Erfindung betrifft daher die Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine mit einem Kontergewicht (523) ausgestattete erste Haltevorrichtung (520), die den ersten Wassertank (500) durch das Kontergewicht (523) an der obersten Position hält, bis der erste Wassertank (500) mit einer definierten Menge an Wasser befüllt ist und eine mit einem Kontergewicht (563) ausgestattete zweite Haltevorrichtung (560), die den zweiten Wassertank (550) durch das Kontergewicht (563) an der obersten Position hält, bis der zweite Wassertank (550) mit einer definierten Menge an Wasser befüllt ist,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

In einer bevorzugten Ausführungsform sind die Haltevorrichtungen so ausgestaltet, dass sie ein schwenkbar gelagertes Sperrelement und ein an der Oberseite des Wassertanks befestigtes hervorstehendes Element umfassen, wobei das schwenkbar gelagerte Sperrelement durch ein Kontergewicht in einer ersten Position gehalten wird, bei der das hervorstehende Element auf dem Sperrelement aufliegt, wenn der Wassertank sich in der obersten Position befindet. Somit ist das Sperrelement auf zwei Achsen gewichtsbelastet gelagert und schwenkt nach unten aus (vorzugsweise um 90°). Das Kontergewicht entspricht der Masse eines befüllten Wassertanks.

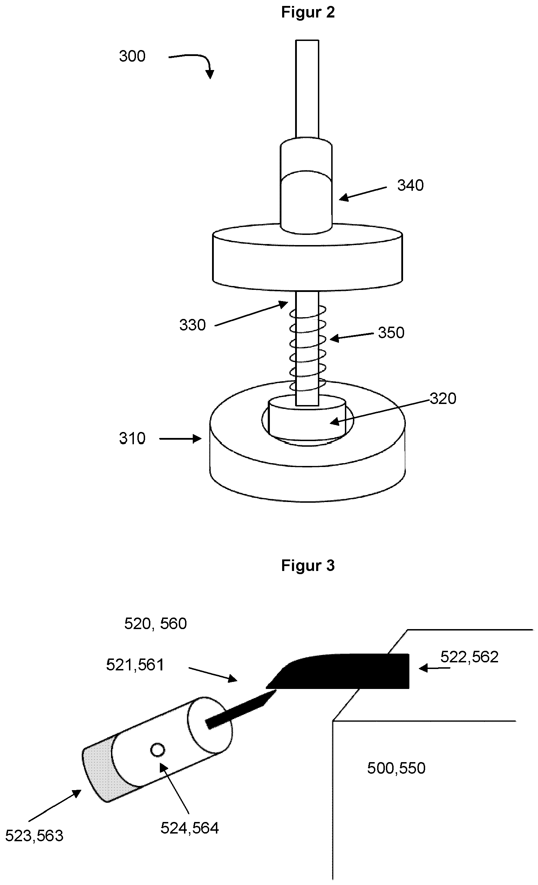

Fährt der Wassertank aufwärts gegen das obere Wasserreservoir, so drückt das hervorstehende Element, das eine konvexe Fläche sein kann (siehe Figur 3) und auf der Oberseite des Wassertanks befestigt ist, das Sperrelement kurz rein. Der Wassertank stützt sich mit der geraden Seite des hervorstehenden Elements auf das Sperrelement und wird dadurch solange unter dem oberen Wasserreservoir gehalten, bis die Gewichtskraft des vollständig gefüllten Wassertanks so groß ist, das mit dem Kontergewicht belasteten Sperrelement herunter zu klappen (vorzugsweise um 90°) und dadurch die Abwärtsbewegung des Wassertanks zu ermöglichen. Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563).

Eine derart ausgestaltete Haltevorrichtung ermöglicht eine einfache Einstellung der Gegengewichtskraft, die den Wassertank an der obersten Position hält bis eine definierte Füllmenge erreicht. Somit wird prinzipiell kein weiteres Mittel zum Erkennen des Füllstands, wie .z.B. ein optischer Sensor, benötigt.

In einer alternativen Ausführungsform werden die Wassertanks elektromagnetisch an der obersten Position gehalten. Die Haltekraft, mit der die Haltevorrichtung den Wassertank fixiert, kann über die Spannung, die an dem Elektromagneten anliegt, sehr genau eingestellt werden. Wenn die Gewichtskraft des befüllten Wassertanks die Kraft des Elektromagneten übersteigt, dann bewegt sich der Wassertank wieder nach unten. Daher ist prinzipiell kein weiteres Mittel zum Erkennen des Füllstands nötig. Jedoch kann die Haltevorrichtung auch so ausgestaltet sein, dass die am Elektromagneten anliegende Spannung abgeschaltet wird, wenn ein definierter Füllstand erreicht ist. Der Füllstand kann in diesem Fall mit einem weiteren Mittel, wie z.B. einem optischen Sensor, einem Gewichtssensor oder einem Schwimmer im Wassertank, ermittelt werden.

Diese Ausführungsform der vorliegenden Erfindung betrifft somit eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt und
wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

Eine alternative Ausführungsform betrifft eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine mit einem Elektromagneten ausgestattete erste Haltevorrichtung (520), die den ersten Wassertank (500) durch den Elektromagneten an der obersten Position hält, bis der erste Wassertank (500) mit einer definierten Menge an Wasser befüllt ist und eine mit einem Elektromagneten ausgestattete zweite Haltevorrichtung (560), die den zweiten Wassertank (550) durch den Elektromagneten an der obersten Position hält, bis der zweite Wassertank (550) mit einer definierten Menge an Wasser befüllt ist,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

Der Elektromagnet der Haltevorrichtung ist so angeordnet, dass er in Kontakt mit dem Wassertank kommt, wenn dieser die oberste Position erreicht. Um eine Haltekraft auf den Wassertank ausüben zu können, besteht der Wassertank aus einem magnetischen Material, bevorzugt aus einem ferromagnetischen Material, z.B. bestimmte Stahlsorten, oder der Wassertank ist mit einer aus einem magnetischen Material hergestellten Ankerplatte versehen. Auf diese Ankerplatte übt der Elektromagnet eine Haltekraft aus, sobald der Wassertank die oberste Position erreicht.

Somit betrifft eine Ausführungsform der vorliegenden Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt und
wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt und
wobei die Haltevorrichtungen (520,560) jeweils eine an den Wassertanks (500,550) befestigte Ankerplatten umfassen, und die Ankerplatten in Kontakt mit den Elektromagneten stehen, wenn die Wassertanks (500,550) an der obersten Position sind.

Eine alternative Ausführungsform der vorliegenden Erfindung betrifft eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine mit einem Elektromagneten ausgestattete erste Haltevorrichtung (520), die den ersten Wassertank (500) durch den Elektromagneten an der obersten Position hält, bis der erste Wassertank (500) mit einer definierten Menge an Wasser befüllt ist und eine mit einem Elektromagneten ausgestattete zweite Haltevorrichtung (560), die den zweiten Wassertank (550) durch den Elektromagneten an der obersten Position hält, bis der zweite Wassertank (550) mit einer definierten Menge an Wasser befüllt ist,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und wobei die Haltevorrichtungen (520,560) jeweils eine an den Wassertanks (500,550) befestigte Ankerplatten umfassen, und die Ankerplatten in Kontakt mit den Elektromagneten stehen, wenn die Wassertanks (500,550) an der obersten Position sind.

In einer bevorzugten Ausführungsform der erfindungsgemäßen Vorrichtung (1) mit elektromagnetischen Haltevorrichtungen, bezieht der Elektromagnet die zum Betrieb notwendige elektrische Energie von einer Kleinwindkraftanlage oder einer PV-Solaranlage. Die erzielte Leistung der Vorrichtung (1) kann dann über die Magnetkraft des Elektromagneten (angelegte Stromstärke) gezielt eingestellt werden. Eine niedrige Magnetkraft bewirkt eine geringere Befüllung des Wassertanks als maximal möglich wäre und setzt dann den Energiegewinnungsprozess (Abwärtsbewegung des Wassertanks) schneller in Gang.

In einer alternativen Ausführungsform werden die Wassertanks magnetisch an der obersten Position gehalten. Die Haltekraft, mit der die Haltevorrichtung den Wassertank fixiert, entspricht dann der Magnetkraft. Wenn die Gewichtskraft des befüllten Wassertanks die Magnetkraft übersteigt, dann bewegt sich der Wassertank wieder nach unten. Daher ist prinzipiell kein weiteres Mittel zum Erkennen des Füllstands nötig.

Elektromagnetische oder magnetische Haltevorrichtungen der vorliegenden Erfindung sind besonders vorteilhaft, da sie keinem mechanischen Verschleiß unterliegen und keine Wartung notwendig ist. Zudem muss keine Feineinstellung mechanischer Bauteile oder Gewichte erfolgen und die Haltevorrichtung kann jederzeit genau auf die optimale Füllmenge des Wassertanks eingestellt werden, um eine effiziente Energieerzeugung zu gewährleisten.

Diese Ausführungsform der vorliegenden Erfindung betrifft somit eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt und
wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

In einer bevorzugten Ausführungsform sind die Magnete (1010,1020,1110,1120) Permanentmagnete. Vorzugsweise bestehen die Magnete (1010,1020,1110,1120) aus einer Neodym-haltigen Legierung. Daher umfasst in einer bevorzugten Ausführungsform der vorliegenden Erfindung die Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt und
wobei die erste Haltevorrichtung (520) mindestens einen Permanentmagneten (1010) auf der Oberseite des ersten Wassertanks (500) und mindestens einen Permanentmagneten (1110) auf der Unterseite des ersten Behälters (110) des oberen Wasserreservoirs (100) umfasst, wobei die beiden Permanentmagnete (1010, 1110) zueinander entgegengesetzt gepolt sind und die Magnetkraft der beiden Permanentmagnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Permanentmagneten (1020) auf der Oberseite des zweiten Wassertanks (550) und mindestens einen Permanentmagneten (1120) auf der Unterseite des zweiten Behälters (210) des oberen Wasserreservoirs (100) umfasst, wobei die beiden Permanentmagnete (1020, 1120) zueinander entgegengesetzt gepolt sind und die Magnetkraft der beiden Permanentmagnete (1020, 1120) der Gewichtskraft des mit der definierten Wassermenge befüllten zweiten Wassertanks (550) entspricht, wenn der zweite Wassertank (550) an der obersten Position ist.

Um eine optimale Energierückgewinnung zu gewährleisten sind die beiden Wassertanks (500, 550) **baugleich.** "Baugleich" bedeutet hierin, dass die Wassertanks in ihren Abmessungen und ihrem Gewicht identisch oder zumindest nahezu identisch (identisch bis auf die Fertigungstoleranzen) sind. Die baugleichen Wassertanks (500, 550) besitzen daher im Wesentlichen das gleiche Volumen und das gleiche Gewicht. Sie können, müssen aber nicht, aus dem gleichen Material gefertigt sein.

Die beiden Wassertanks (500,550) der erfindungsgemäßen Vorrichtung (1) zum reversiblen Speichern und Freisetzen von Energie bewegen sich **periodisch** und in entgegengesetzter Richtung. Eine "periodische Bewegung" meint hierin, eine Bewegung, bei der sich der Wassertank nach einer gewissen Zeit, *der Periodendauer,* wieder an den Ausgangsort zurückkehrt und dabei die gleiche Richtung und die gleiche Geschwindigkeit aufweist. Die vertikale Achse, die durch die Behälter der oberen und unteren Wassertanks gebildet wird, wird von den Wassertanks wiederholt durchlaufen, d.h. die periodische Bewegung der Wassertanks beschreibt eine geschlossene Bahnkurve.

Die Effizienz der Energiefreisetzung ist abhängig von der Periodendauer. Eine längere Periodendauer führt zu einer effizienteren Energiefreisetzung. Daher ist es vorteilhaft, die Vorrichtung mit einer möglichst langen Periodendauer, d.h. mit einer möglichst langsamen Bewegung der Wassertanks zu betreiben.

In einer bevorzugten Ausführungsform bestehen die selbstschließenden Ventile aus einem Ventilsitz (310), einem Ventilteller (320), einer Ventilspindel (330), einem Ventilspindeldom (340) und einer Sprungfeder (350) (siehe Figur 2). Die Sprungfeder befindet sich dabei zwischen Ventilspindeldom und Ventilteller und hält das Ventil geschlossen. Wirkt von außen eine mechanische Kraft gegen den federbelasteten Ventilteller, so wird dieser nach oben gedrückt und das Ventil geöffnet, sobald die mechanische Kraft größer ist als die Federkraft.

Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt und
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird.

In einer bevorzugten Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird, und
wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

Vorzugsweise sind die die Magnete (1010,1020,1110,1120) Permanentmagnete. Vorzugsweise weisen die Ventilöffnungsvorrichtungen (401-404) höhenverstellbare Stifte (411-414) auf, die so geformt sind, dass sie die selbstschließenden Ventile (301-304) öffnen.

In einer weiteren bevorzugten Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird, und
wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

Vorzugsweise weisen die Ventilöffnungsvorrichtungen (401-404) höhenverstellbare Stifte (411-414) auf, die so geformt sind, dass sie die selbstschließenden Ventile (301-304) öffnen.

In einer weiteren bevorzugten Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird, und
wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563). Vorzugsweise weisen die Ventilöffnungsvorrichtungen (401-404) höhenverstellbare Stifte (411-414) auf, die so geformt sind, dass sie die selbstschließenden Ventile (301-304) öffnen.

In einer bevorzugten Ausführungsform weisen die Ventilöffnungsvorrichtungen der erfindungsgemäßen Vorrichtung höhenverstellbare Stifte auf. Diese Stifte sind so geformt, dass sie die selbstschließenden Ventile öffnen können, in dem der Ventil zurückgedrückt wird. Daher sind die Stifte auch mechanisch so stabil, dass sie der Federkraft der Sprungfeder (350) standhalten können. Die Stifte sind höhenverstellbar, wodurch die Öffnung der selbstschließenden Ventile eingestellt werden kann und damit auch der Volumenstrom, die Abfahrtsmasse und die Füllzeit.

Die Effizienz der Energiefreisetzung ist neben der Periodendauer auch von der Masse der befüllten Wassertanks (500,550) ("Abfahrtsmasse") abhängig. Eine höhere Abfahrtsmasse führt zu einer effizienteren Energiefreisetzung. Daher ist es vorteilhaft, die Wassertanks an der obersten Position so vollständig wie möglich zu befüllen.

Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die Ventilöffnungsvorrichtungen (401-404) höhenverstellbare Stifte (411-414) aufweisen, die so geformt sind, dass sie die selbstschließenden Ventile (301-304) öffnen.

Bevorzugt ist auch eine Ausführungsform der erfindungsgemäßen Vorrichtung (1) die folgende Bestandteile umfasst:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird, und
wobei die Ventilöffnungsvorrichtungen (401-404) höhenverstellbare Stifte (411-414) aufweisen, die so geformt sind, dass sie die selbstschließenden Ventile (301-304) öffnen.

In einer weiteren Ausführungsform der vorliegenden Erfindung umfasst die Vorrichtung zudem ein Masseschwungrad (750) zur Aufnahme der bei der Abwärtsbewegung eines Wassertanks (500,550) entstehenden Kraft. Das Masseschwungrad erfüllt drei Funktionen in der erfindungsgemäßen Vorrichtung: Erstens übernimmt es die kurzzeitig große Kraft der abwärtsbewegenden Wassertanks und zweitens überträgt es diese Kraft im zeitlichen Versatz auf den Stromgenerator (800). Dadurch bleibt das System in Bewegung, auch während der Phasen, in denen beide Wassertanks befüllt und entleert werden. Zudem wirkt sich der Widerstand des Masseschwungrads auf die Abwärtsbewegung des Wassertanks positiv aus, denn durch eine langsamere Abwärtsbewegung nimmt das Masseschwungrad mehr Energie auf. Somit betrifft die vorliegende Erfindung eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die Antriebseinheit (700) ferner ein Masseschwungrad (750) zur Aufnahme der bei der Abwärtsbewegung eines Wassertanks (500,550) entstehenden Kraft umfasst.

In einer Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Masseschwungrad (750) zur Aufnahme der bei der Abwärtsbewegung eines Wassertanks (500,550) entstehenden Kraft umfasst, und
wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

Vorzugsweise sind die die Magnete (1010,1020,1110,1120) Permanentmagnete. Vorzugsweise weisen die Ventilöffnungsvorrichtungen (401-404) höhenverstellbare Stifte (411-414) auf, die so geformt sind, dass sie die selbstschließenden Ventile (301-304) öffnen. Vorzugsweise weisen die Ventilöffnungsvorrichtungen (401,402) auf dem Boden des unteren Wasserreservoirs (200) einen höheren Stift (411,412) auf als die Stifte (413,414) der Ventilöffnungsvorrichtungen (403,404) auf der Oberseite des ersten Wassertanks (500) und des zweiten Wassertanks (550), um sicherzustellen, dass ein Wassertank in das untere Wasserreservoir (200) schneller entleert wird als ein Wassertank am oberen Wasserreservoir (100) befüllt wird.

In einer weiteren Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Masseschwungrad (750) zur Aufnahme der bei der Abwärtsbewegung eines Wassertanks (500,550) entstehenden Kraft umfasst, und
wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

Vorzugsweise weisen die Ventilöffnungsvorrichtungen (401-404) höhenverstellbare Stifte (411-414) auf, die so geformt sind, dass sie die selbstschließenden Ventile (301-304) öffnen. Vorzugsweise weisen die Ventilöffnungsvorrichtungen (401,402) auf dem Boden des unteren Wasserreservoirs (200) einen höheren Stift (411,412) auf als die Stifte (413,414) der Ventilöffnungsvorrichtungen (403,404) auf der Oberseite des ersten Wassertanks (500) und des zweiten Wassertanks (550), um sicherzustellen, dass ein Wassertank in das untere Wasserreservoir (200) schneller entleert wird als ein Wassertank am oberen Wasserreservoir (100) befüllt wird.

In einer Ausführungsform umfasst die erfindungsgemäße Vorrichtung (1) zum reversiblen Speichern und Freisetzen von Energie:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Masseschwungrad (750) zur Aufnahme der bei der Abwärtsbewegung eines Wassertanks (500,550) entstehenden Kraft umfasst, und
wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563). Vorzugsweise weisen die Ventilöffnungsvorrichtungen (401-404) höhenverstellbare Stifte (411-414) auf, die so geformt sind, dass sie die selbstschließenden Ventile (301-304) öffnen. Vorzugsweise weisen die Ventilöffnungsvorrichtungen (401,402) auf dem Boden des unteren Wasserreservoirs (200) einen höheren Stift (411,412) auf als die Stifte (413,414) der Ventilöffnungsvorrichtungen (403,404) auf der Oberseite des ersten Wassertanks (500) und des zweiten Wassertanks (550), um sicherzustellen, dass ein Wassertank in das untere Wasserreservoir (200) schneller entleert wird als ein Wassertank am oberen Wasserreservoir (100) befüllt wird.

Für die Energiegewinnung ist es besonders vorteilhaft, wenn der untere Wassertank vollständig entleert ist, bevor der obere Wassertank vollständig befüllt ist und sich abwärts bewegt. Um eine Entleerung des unteren Wassertanks sicherzustellen, die schneller erfolgt als die Befüllung des oberen Wassertanks, können die Ventile auf dem Boden der Wassertanks durch die entsprechenden Ventilöffnungsvorrichtungen weiter geöffnet werden als die Ventile im Boden des oberen Wasserreservoirs.

In einer bevorzugten Ausführungsform können die Ventilöffnungsvorrichtungen auf dem Boden des unteren Wasserreservoirs einen höheren Stift aufweisen als die Stifte der Ventilöffnungsvorrichtungen auf der Oberseite des ersten Wassertanks und des zweiten Wassertanks.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird,
wobei die Ventilöffnungsvorrichtungen (401-404) höhenverstellbare Stifte (411-414) aufweisen, die so geformt sind, dass sie die selbstschließenden Ventile (301-304) öffnen, und
wobei die Ventilöffnungsvorrichtungen (401,402) auf dem Boden des unteren Wasserreservoirs (200) einen höheren Stift (411,412) aufweisen als die Stifte (413,414) der Ventilöffnungsvorrichtungen (403,404) auf der Oberseite des ersten

Wassertanks (500) und des zweiten Wassertanks (550), um sicherzustellen, dass ein Wassertank in das untere Wasserreservoir (200) schneller entleert wird als ein Wassertank am oberen Wasserreservoir (100) befüllt wird.

Für eine erhöhte Stabilität der Vorrichtung und der gerichteten Aufwärts- und Abwärtsbewegung der Wassertanks, können diese an vertikalen Laufschienen (680) angebracht sein. Somit erfolgt in einer weiteren Ausführungsform der Erfindung die Aufwärts- und Abwärtsbewegung des ersten Wassertanks (500) und des zweiten Wassertanks (550) in Laufschienen (680).

Weiterhin ist es vorteilhaft, wenn die Wassertanks seitlich mit transparenten Füllstandsrohren ausgestattet sind, sodass Füllstandseinstellungen im Betrieb möglich und Füllstände in den Wassertanks erkennbar sind.

Die Antriebseinheit (700) der erfindungsgemäßen Vorrichtung sorgt dafür, dass sich die Wassertanks aufwärts bewegen und dass bei der Abwärtsbewegung eines Wassertanks ein Stromgenerator (800) angetrieben wird. In einer bevorzugten Ausführungsform wird die aus der alternierenden Aufwärts- und Abwärtsbewegung der Wassertanks entstehende Energie mit einer Kette (784), die an den Wassertanks befestigt ist, an den Generator (800) geleitet. Vorzugsweise ist die Kette über zwei Zahnräder (701,702) vertikal über die volle Fahrstrecke der Wassertanks gespannt, wobei ein Zahnrad (701) mittig zwischen den beiden Tanks des unteren Wasserreservoirs sitzt und das zweite Zahnrad (702) über dem oberen Wasserreservoir auf einer Welle (704) sitzt, die mit dem Generator verbunden ist. Sobald sich ein Wassertank bewegt, dreht sich die Welle (704), je nachdem welcher Wassertank abwärts fährt, nach rechts oder nach links.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die Antriebseinheit (700) folgende Bestandteile umfasst: ein mittig zwischen den Behältern des unteren Wasserreservoirs (200) angeordnetes Zahnrad (701), ein mittig zwischen den Behältern des oberen Wasserreservoirs (100) angeordnetes Zahnrad (702), eine zwischen die beiden Zahnrädern (701,702) gespannte Kette (703), die mit dem ersten Wassertank (500) und dem zweiten Wassertank (550) verbunden ist und eine Welle (704), über die das mittig zwischen den Behältern des oberen Wasserreservoirs (100) angeordnete Zahnrad (702) den Generator (800) antreibt.

Um eine einseitige Belastung oder gar ein Verkanten der Wassertanks durch die Antriebseinheit (700) zu vermeiden, können die Wassertanks der erfindungsgemäßen Vorrichtung mit einer weiteren Antriebseinheit (710) verbunden sein. Die weitere Antriebseinheit ist dann auf der gegenüberliegenden Seite der ersten Antriebseinheit (700) mit den Wassertanks verbunden, um eine gleichmäßige Bewegung der Wassertanks zu ermöglichen.

Diese Antriebseinheit (710) kann aus den gleichen Bestandteilen bestehen wie die Antriebseinheit (700), d.h. seitlich der Wassertanks, gegenüber der Antriebskette, ist eine weitere Kette in einer Kettenspannvorrichtung am Wassertank angeschlossen. Diese Kette läuft bis über das obere Wasserreservoir und ist mit dem zweiten Wassertank in gleicher Bauweise verbunden. Somit wirkt nun eine zweite Kraft im Gleichgewicht auf die gegenüberliegende Seite des Wassertanks, auf der das die Antriebseinheit (700) angeschlossen ist. Da an allen Anschlüssen jetzt die gleichen Kräfte wirken, wird der Wassertank durch die Gegenmasse des zweiten Wassertanks gerade gezogen.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die Vorrichtung (1) weiter eine weitere Antriebseinheit (710) umfasst, die mit dem ersten Wassertank (500) und dem zweiten Wassertank (550) gegenüber der Antriebseinheit (700) verbunden ist, um sicherzustellen, dass die Aufwärts- und Abwärtsbewegung des ersten Wassertanks (500) und des zweiten Wassertanks (550) durch die Antriebseinheit (700) gleichmäßig erfolgt.

Durch die periodisch alternierende Aufwärts- und Abwärtsbewegung der Wassertanks und der dadurch entstehenden Seitenumkehr der Krafteinspeisung kommt es zu unterschiedlichen Drehrichtungen auf der Welle (704). Das bedeutet, dass die Welle einmal den Krafteintrag in Drehrichtung links einbringt und gegensätzlich einmal in Drehrichtung rechts.

Um die periodisch alternierenden Abwärtsbewegung und Aufwärtsbewegung der Wassertanks in eine synchrone Drehbewegung umzuwandeln, kann die Vorrichtung ferner mit einem Wandelgetriebe ausgestattet sein.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist.

In einer Ausführungsform umfasst die erfindungsgemäße Vorrichtung (1):
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist, und
wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

Vorzugsweise sind die die Magnete (1010,1020,1110,1120) Permanentmagnete.

In einer weiteren Ausführungsform umfasst die erfindungsgemäße Vorrichtung (1):
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist, und wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

In einer weiteren Ausführungsform umfasst die erfindungsgemäße Vorrichtung (1):
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist, und wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563).

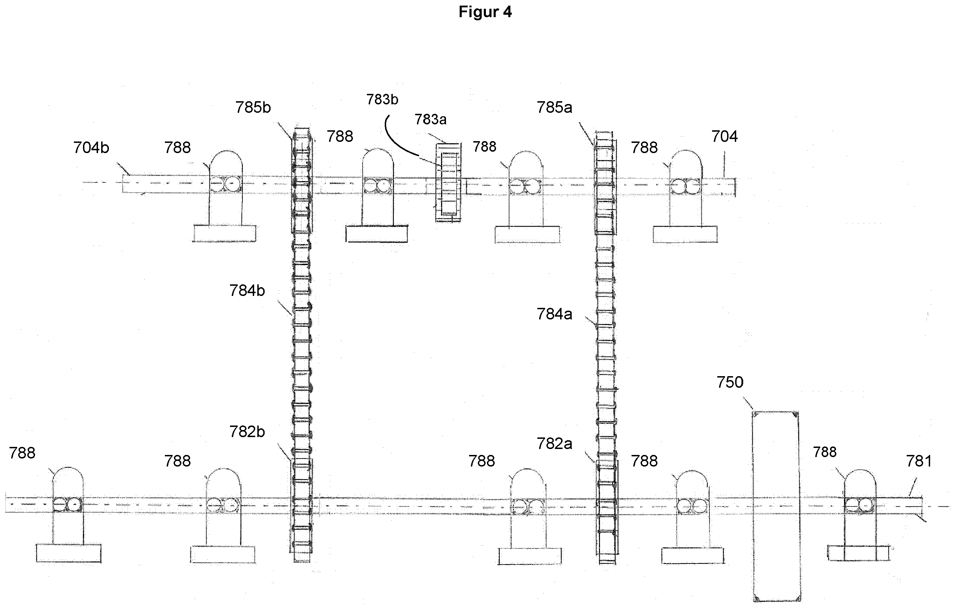

In einer bevorzugten Ausführungsform umfasst das Wandelgetriebe (780) eine Generatorwelle (781), auf der zwei Freilaufzahnräder (782a,782b) angeordnet sind, wobei das Freilaufzahnrad (782a) über eine Kette (784a) mit einem auf der Welle (704) angeordneten Freilaufzahnrad (785a) verbunden ist, das Freilaufzahnrad (782b) über eine Kette (784b) mit einem auf einer zweiten Welle (704b) angeordnetem Freilaufzahnrad (785b) verbunden ist, wobei ein auf der Welle (704) angeordnetes Zahnrad (783a) in ein auf der zweiten Welle (704b) angeordnetes Zahnrad (783b) eingreift und wobei der Generator (800) über die Generatorwelle (781) angetrieben wird (Siehe Figur 4). Die beiden Wellen (704) und (704b) sind so angeordnet, dass die Zahnräder (783a,783b) ineinandergreifen und die Drehung der Welle (704) zur Folge hat, dass sich die zweite Welle (704b) in entgegengesetzter Richtung dreht. Die Wellen können üblicherweise in Kugellagerwellenböcken (788) gehalten werden.

In dieser Ausgestaltung der Antriebseinheit (700) wird durch die alternierende Abwärtsbewegung der Wassertanks auf die Welle (704) (z.B. über eine Kupplung) einmal eine Kraft in Drehrichtung links und einmal in Drehrichtung rechts ausgeübt. Die auf der Welle (704) und der zweiten Welle (704b) angeordneten Freilaufzahnräder (785a, 785b) sind identisch konfiguriert, sodass sich jeweils nur eines der Freilaufzahnräder dreht, wenn die Welle bewegt wird. Dreht sich beispielsweise die Welle (704) im Uhrzeigersinn (Drehrichtung rechts), dann dreht sich das Freilaufzahnrad (785a) im Kraftschluss auf der Welle ebenfalls im Uhrzeigersinn. Über die Kette (784a) wird die Kraft auf das Freilaufzahnrad (782a) übertragen und so die freidrehbare Generatorwelle (781) ebenfalls im Uhrzeigersinn angetrieben. Die Drehbewegung der Generatorwelle (781) treibt dann den Generator (800) an und kann auch dazu genutzt werden, ein Masseschwungrad (750) in Rotation zu versetzen. Dreht sich dahingegen die Welle (704) entgegen dem Uhrzeigersinn (links), dann läuft das Freilaufzahnrad (785a) frei durch. Dabei dreht sich das an der Welle (704) angeschlossene Zahnrad (783a) ebenfalls entgegen dem Uhrzeigersinn und bewirkt, dass sich das an der zweiten Welle (704b) angeschlossene Zahnrad (783b) im Uhrzeigersinn dreht. Die zweite Welle dreht sich somit im Uhrzeigersinn und führt dazu, dass sich das Freilaufzahnrad (785b) im Kraftschluss auf der Welle ebenfalls im Uhrzeigersinn dreht. Über die Kette (784b) wird die Kraft auf das Freilaufzahnrad (782b) übertragen und so die freidrehbare Generatorwelle (781) ebenfalls im Uhrzeigersinn angetrieben. Schließlich wird die Generatorwelle (781) nur im Uhrzeigersinn angetrieben, unabhängig von der Richtung in der die Welle (704) gedreht wird.

Die obigen Ausführungen sind nur beispielhaft für den Antrieb einer Generatorwelle im Uhrzeigersinn. Der Freilauf der Zahnräder (785a,785b,782a,782b) kann ebenso umgekehrt eingestellt sein, sodass die Generatorwelle entgegen dem Uhrzeigersinn angetrieben wird.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist, und
wobei das Wandelgetriebe (780) eine Generatorwelle (781), auf der zwei Freilaufzahnräder (782a,782b) angeordnet sind, wobei das Freilaufzahnrad (782a) über eine Kette (784a) mit einem auf der Welle (704) angeordneten Freilaufzahnrad (785a) verbunden ist, das Freilaufzahnrad (782b) über eine Kette (784b) mit einem auf einer zweiten Welle (704b) angeordnetem Freilaufzahnrad (785b) verbunden ist, wobei ein auf der Welle (704) angeordnetes Zahnrad (783a) in ein auf der zweiten Welle (704b) angeordnetes Zahnrad (783b) eingreift und wobei der Generator (800) über die Generatorwelle (781) angetrieben wird.

In einer weiteren bevorzugten Ausführungsform umfasst das Wandelgetriebe (780) eine Generatorwelle (781), auf der ein Freilaufzahnrad (782) und ein Zahnrad (783a) angeordnet sind, wobei das Freilaufzahnrad (782) über eine Kette (784) mit einem auf der Welle (704) angeordneten Zahnrad (783b) verbunden ist, das Zahnrad (783a) in ein auf der Welle (704) angeordnetes Freilaufzahnrad (785) eingreift und wobei der Generator (800) über die Generatorwelle (781) angetrieben wird.

Somit betrifft die vorliegende Erfindung ebenso eine Vorrichtung (1) umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt,
wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist, und
wobei das Wandelgetriebe (780) eine Generatorwelle (781) umfasst, auf der ein Freilaufzahnrad (782) und ein Zahnrad (783a) angeordnet sind, wobei das Freilaufzahnrad (782) über eine Kette (784) mit einem auf der Welle (704) angeordneten Zahnrad (783b) verbunden ist, das Zahnrad (783a) in ein auf der Welle (704) angeordnetes Freilaufzahnrad (785) eingreift und wobei der Generator (800) über die Generatorwelle (781) angetrieben wird.

Bevorzugter weise umfasst die Generatorwelle (781) des Wandelgetriebes (780) in den hierin beschriebenen erfindungsgemäßen Vorrichtungen (1) weiter ein Masseschwungrad (750) zur Aufnahme der bei der Abwärtsbewegung eines Wassertanks (500,550) entstehenden Kraft.

In einer weiteren Ausführungsform kann das obere Wasserreservoir (100) der hierin beschriebenen erfindungsgemäßen Vorrichtung zudem einen weiteren Behälter (130) zur Aufnahme von Regenwasser umfassen.

In einer weiteren Ausführungsform kann die erfindungsgemäße Vorrichtung in Pumprichtung hinter der Pumpe (650) zum Pumpen von Wasser aus dem unteren Wasserreservoir (200) in das obere Wasserreservoir (100) ein Rückschlagventil (660) und eine Wartungsvorrichtung (670) mit einem Spülventil (671) an die Leitung (600) angeschlossen sein.

Ein weiterer Aspekt der vorliegenden Erfindung betrifft ein Verfahren zur Erzeugung von Strom, umfassend die Schritte:
a) Bereitstellen einer hierein beschriebenen Vorrichtung (1) zum reversiblen Speichern und Freisetzen von Energie, wobei ein Wassertank (500) an der obersten Position ist und der andere Wassertank (550) an der untersten Position ist;
b) Befüllen des Wassertanks (500) an der obersten Position mit Wasser aus dem oberen Wasserreservoir (100) durch Öffnen des selbstschließenden Ventils (301) mittels der Ventilöffnungsvorrichtung (403);
c) Den Wassertank (500) an der obersten Position erlauben sich mittels Gravitation abwärts bis zur untersten Position durch Lösen der Haltevorrichtung (520) zu bewegen und dabei mittels der Antriebseinheit (700) den Wassertank (550) an der untersten Position aufwärts bis zur obersten Position zu ziehen und den Generator (800) zur Stromerzeugung anzutreiben,
d) Entleeren des Wassertanks (500) an der untersten Position in das untere Wasserreservoir (200) durch Öffnen des selbstschließenden Ventils (303) mittels der Ventilöffnungsvorrichtung (401).

Energiespeicher dienen der zeitlichen Entkopplung von Energieerzeugung und -bedarf. Somit können sie einen Ausgleich bei nicht regelbarem, schwankendem Energieangebot schaffen, die Versorgungssicherheit verbessern und das Stromnetz stabilisieren. Diese Anlagen werden dort gebaut, wo sie den meisten Ertrag erbringen - für die Windkraft ist das auf dem Festland, in Regionen starker Windlastzonen und Offshore. Während die Stromeinspeisung aus Photovoltaik bereits einer Tag-Nacht-Schwankung unterliegt, liefert vor allem die Windkraft schwer vorhersehbar und ungleichmäßig Strom. Bei Starkwind müssen Windkraftanlagen dort temporär vom Netz genommen werden, wo es sonst zur Netzüberlastung kommen würde. Pumpspeicherwerke sind die bisher effizientesten Energiespeicher, liegen funktionsbedingt allerdings in den Bergregionen. Beim Energietransfer der dezentralen, regenerativen Kraftwerkparks dorthin kommt es zu unvermeidbaren Netzverlusten. Außerdem ist das Netz in manchen Regionen dafür unzureichend ausgebaut. Daher wäre eine dezentrale Energiespeicherung in der Nähe der Stromproduktion von Vorteil, d.h. in der Nähe oder innerhalb der Windkraftanlage. Somit betrifft ein weiterer Aspekt der vorliegenden Erfindung eine Windkraftanlage (900) umfassend eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

In einer Ausführungsform umfasst die Windkraftanlage (900) eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

Vorzugsweise sind die die Magnete (1010,1020,1110,1120) Permanentmagnete.

In einer Ausführungsform umfasst die Windkraftanlage (900) eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,
wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

In einer Ausführungsform umfasst die Windkraftanlage (900) eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht übersteigt, das einer Befüllung mit einer definierten Wassermenge entspricht, und eine zweite Haltevorrichtung (560), die so ausgestaltet ist, dass sie den zweiten Wassertank (550) von der obersten Position automatisch freigibt, wenn der zweite Wassertank (550) ein definiertes Gewicht übersteigt, das einer Befüllung mit einer definierten Wassermenge entspricht,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist,

wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt, und
wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563).

Aufgrund der modularen und kompakten Bauweise der erfindungsgemäßen Vorrichtung (1) kann diese innerhalb des Turms (910) einer Windkraftanlage (900) betrieben werden. Der Strom aus der Windenergie treibt die Pumpe (650) an, die das Wasser aus dem unteren Reservoir (200) ins obere Reservoir (100) pumpt, und so die Energie speichert. In windarmen Zeiten, kann dann die so gespeicherte Energie für eine konstante Stromversorgung ins Netz eingespeist werden. Bei Starkwind, wenn die Windkraftanlage vom Netz genommen werden müsste, kann die überschüssige Windenergie in die Vorrichtung (1) geleitet werden, um eine Netzüberlastung zu vermeiden. Die Windkraftanlage müsste dann nicht vom Netz genommen werden, sondern könnte weiterhin Strom in das Netz einspeisen.

Somit umfasst in einer Ausführungsform die Windkraftanlage (900) eine hierin offenbarte Vorrichtung (1) zum reversiblen Speichern und Freisetzen von Energie, wobei die Vorrichtung (1) im Turm (910) der Windkraftanlage (910) positioniert ist.

In einer weiteren Ausführungsform können die Außenflächen des Turms (910) zusätzlich mit Solarpanelen (920) zur Stromerzeugung ausgekleidet sein. Der Strom der Solarpanele (920) kann zum Betrieb der Pumpe (650) genutzt werden. Daher betrifft die vorliegende Erfindung ebenfalls eine Windkraftanlage (900) umfassend eine hierin offenbarte Vorrichtung (1) zum reversiblen Speichern und Freisetzen von Energie, wobei die Vorrichtung (1) im Turm (910) der Windkraftanlage (910) positioniert ist und die Außenfläche des Turms (910) mit Solarpanelen (920) zur Stromerzeugung ausgekleidet sind.

### Figurenbeschreibung

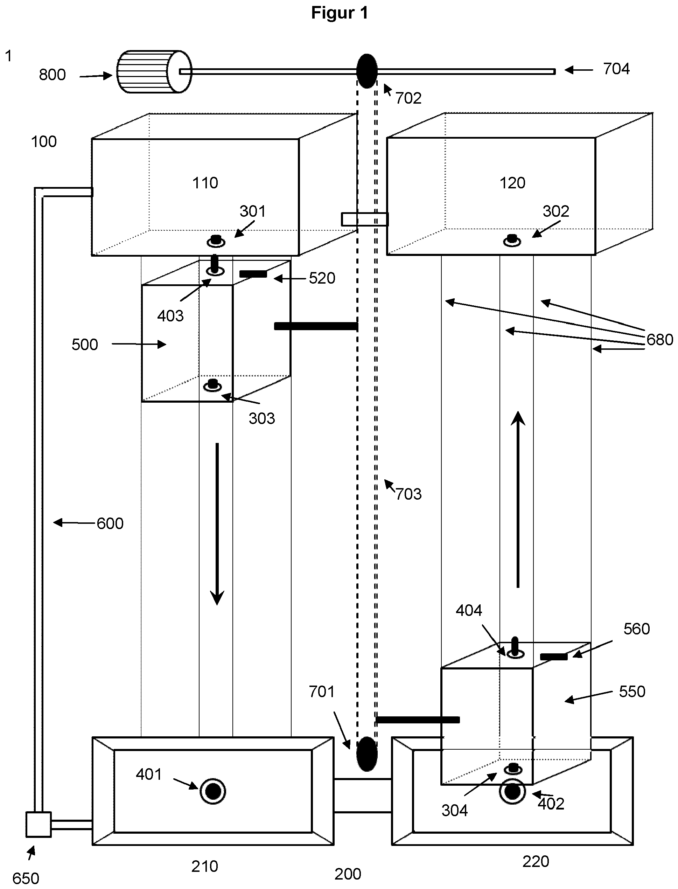

- **Figur 1**: zeigt eine erfindungsgemäße Vorrichtung (1) zum reversiblen Speichern und Freisetzen von Energie.
- **Figur 2**: zeigt eine bevorzugte Ausführungsform des selbstschließenden Ventils (300) mit einem Ventilsitz (310), einem Ventilteller (320), einer Ventilspindel (330), einem Ventilspindeldom (340) und einer Sprungfeder (350), die das Ventil geschlossen hält.
- **Figur 3**: zeigt eine bevorzugte Ausführungsform der Haltevorrichtung (520,560) mit einem Sperrelement (521,561) das schwenkbar an den beiden Achsen (524, 564) gelagert ist und mittels Kontergewicht (523,563) in einer Halteposition gehalten wird, bis eine Kraft auf das Sperrelement wirkt, die größer ist, als die Gewichtskraft des Kontergewichts und das Sperrelement in eine zweite Position schwenkt, in der der Wassertank (500,550) nicht mehr gehalten wird.
- **Figur 4**: zeigt schematisch eine bevorzugte Ausführungsform der Antriebseinheit (700) mit einem Wandelgetriebe (780) und einem Masseschwungrad (750). In diesem Beispiel besteht das Wandelgetriebe (780) aus einer Generatorwelle (781) mit zwei Freilaufzahnräder (782a,782b), einer Welle (704) mit einem Freilaufzahnrad (785a) und einem Zahnrad (783a), und einer zweiten Welle (704b) mit einem Freilaufzahnrad (785b) und einem Zahnrad (783b). Die Freilaufzahnräder (782a, 782b, 785a, 785) sind über eine Kette (784a, 784b) miteinander verbunden. Die beiden Wellen (704) und (704b) sind so angeordnet, dass die Zahnräder (783a,783b) ineinandergreifen und die Drehung der Welle (704) zur Folge hat, dass sich die zweite Welle (704b) in entgegengesetzter Richtung dreht.

### Bezugszeichenliste

- 1: Vorrichtung zum reversiblen Speichern und Freisetzen von Energie
- 100: obere Wasserreservoir
- 110: erste Behälter
- 120: zweite Behälter
- 130: Regenwasserbehälter
- 200: untere Wasserreservoir
- 210: erste Behälter
- 220: zweite Behälter
- 300-304: selbstschließendes Ventil
- 310: Ventilsitz
- 320: Ventilteller
- 330: Ventilspindel
- 340: Ventilspindeldom
- 350: Feder
- 401-404: Ventilöffnungsvorrichtung
- 411-414: höhenverstellbare Stifte
- 500: erste Wassertank
- 520: erste Haltevorrichtung
- 521: schwenkbar gelagertes Sperrelement
- 522: hervorstehendes Element
- 523: Kontergewicht
- 524: Achse
- 550: zweite Wassertank
- 560: zweite Haltevorrichtung
- 561: schwenkbar gelagerte Sperrelement
- 562: hervorstehende Element
- 563: Kontergewicht
- 564: Achse
- 600: Leitung
- 650: Pumpe
- 660: Rückschlagventil
- 670: Wartungsvorrichtung
- 671: Spülventil
- 680: Laufschienen
- 700: Antriebseinheit
- 701,702: Zahnrad
- 703: Kette
- 704,704b: Welle
- 750: Masseschwungrad
- 780: Wandelgetriebe
- 781: Generatorwelle
- 782,782a,782b: Freilaufzahnrad
- 783,783a,783b: Zahnrad
- 784,784a,784b: Kette
- 785,785a,785b: Freilaufzahnrad
- 788: Kugellagerwellenbock
- 800: Generator
- 900: Wiindkraftanlage
- 910: Turm
- 920: Solarpanel
- 1010,1020: Magnet auf der Oberseite des Wassertanks
- 1110,1120: Magnet an der Unterseite des Behälters
- 1200,1300: Elektromagnet

## Patentansprüche

1. Eine Vorrichtung (1) zum reversiblen Speichern und Freisetzen von Energie umfassend:
a) ein oberes Wasserreservoir (100) und ein unteres Wasserreservoir (200), wobei das obere Wasserreservoir (100) aus einem ersten Behälter (110) und einem zweiten Behälter (120) besteht, wobei beide Behälter miteinander kommunizieren und beide Behälter an ihrem Boden mit einem selbstschließenden Ventil (301,302) ausgestattet sind; wobei das untere Wasserreservoir (200) aus einem ersten Behälter (210) und einem zweiten Behälter (220) besteht, wobei beide Behälter miteinander kommunizieren und beide Behälter auf ihrem Boden mit einer Ventilöffnungsvorrichtung (401,402) ausgestattet sind;
b) einen ersten Wassertank (500), dessen Oberseite eine Ventilöffnungsvorrichtung (403) aufweist und dessen Unterseite ein selbstschließendes Ventil (303) aufweist, wobei der erste Wassertank (500) so angeordnet ist, dass er mit dem ersten Behälter (110) des oberen Wasserreservoirs (100) und mit dem ersten Behälter (210) des unteren Wasserreservoirs (200) eine vertikale Achse bildet und wobei der erste Wassertank (500) auf dieser vertikalen Achse periodisch beweglich ist, sodass er an einer obersten Position mit seiner Ventilöffnungsvorrichtung (403) das selbstschließende Ventil (301) des ersten Behälters (110) öffnet und an einer untersten Position die Ventilöffnungsvorrichtung (401) des ersten Behälters (210) das selbstschließende Ventil (303) des ersten Wassertanks (500) öffnet;
c) einen zweiten baugleichen Wassertank (550), dessen Oberseite eine Ventilöffnungsvorrichtung (404) aufweist und dessen Unterseite ein selbstschließendes Ventil (304) aufweist, wobei der zweite Wassertank (550) so angeordnet ist, dass er mit dem zweiten Behälter (120) des oberen Wasserreservoirs (100) und mit dem zweiten Behälter (220) des unteren Wasserreservoirs (200) eine vertikale Achse bildet und wobei der zweite Wassertank (550) auf dieser vertikalen Achse entgegengesetzt zum ersten Wassertank (500) und periodisch beweglich ist, sodass er an einer obersten Position mit seiner Ventilöffnungsvorrichtung (404) das selbstschließende Ventil (302) des zweiten Behälters (120) öffnet und an einer untersten Position die Ventilöffnungsvorrichtung (402) des zweiten Behälters (220) das selbstschließende Ventil (304) des zweiten Wassertanks (550) öffnet;
d) eine das obere Wasserreservoir (100) und das untere Wasserreservoir (200) verbindende Leitung (600);
e) eine mit der Leitung verbundene Pumpe (650) zum Pumpen von Wasser aus dem unteren Wasserreservoir (200) in das obere Wasserreservoir (100),
f) eine erste Haltevorrichtung (520), die so ausgestaltet ist, dass sie den ersten Wassertank (500) von der obersten Position automatisch freigibt, wenn der erste Wassertank (500) ein definiertes Gewicht, das einer Befüllung mit einer definierten Wassermenge entspricht, übersteigt und eine zweite Haltevorrichtung (560), die so ausgestaltet ist, dass sie den zweiten Wassertank (550) von der obersten Position automatisch freigibt, wenn der zweite Wassertank (550) ein definiertes Gewicht, das einer Befüllung mit einer definierten Wassermenge entspricht, übersteigt,
g) eine Antriebseinheit (700), die mit dem ersten Wassertank (500) und mit dem zweiten Wassertank (550) verbunden und zwischen diesen angeordnet ist, und
h) einen Generator (800) zur Erzeugung von Strom, der mit der Antriebseinheit (700) verbunden ist, wobei der erste und zweite Wassertank (500,550) über die Antriebseinheit (700) in Antriebskontakt mit dem Generator (800) stehen, der durch die entgegengesetzte periodische Bewegung der Wassertanks (500, 550) Strom erzeugt.

2. Die Vorrichtung (1) gemäß Anspruch 1, wobei die erste Haltevorrichtung (520) mindestens einen Magneten (1010) auf der Oberseite des ersten Wassertanks (500) und mindestens einen Magneten (1110) auf der Unterseite des ersten Behälters (110) des oberen Wasserreservoirs (100) umfasst, wobei die beiden Magnete (1010, 1110) zueinander entgegengesetzt gepolt sind und die Magnetkraft der beiden Magnete (1010, 1110) der Gewichtskraft des mit der definierten Wassermenge befüllten ersten Wassertanks (500) entspricht, wenn der erste Wassertank (500) an der obersten Position ist, und wobei die zweite Haltevorrichtung (560) mindestens einen Magneten (1020) auf der Oberseite des zweiten Wassertanks (550) und mindestens einen Magneten (1120) auf der Unterseite des zweiten Behälters (210) des oberen Wasserreservoirs (100) umfasst, wobei die beiden Magnete (1020, 1120) zueinander entgegengesetzt gepolt sind und die Magnetkraft der beiden Magnete (1020, 1120) der Gewichtskraft des mit der definierten Wassermenge befüllten zweiten Wassertanks (550) entspricht, wenn der zweite Wassertank (550) an der obersten Position ist.

3. Die Vorrichtung (1) gemäß Anspruch 1, wobei die erste Haltevorrichtung (520) einen Elektromagneten (1200) mit einstellbarer Magnetkraft umfasst, die so ausgestaltet ist, dass sie den ersten Wassertank (500) von der obersten Position automatisch freigibt, wenn der erste Wassertank (500) eine Gewichtskraft ausübt, die einer Befüllung mit einer definierten Wassermenge entspricht, die Magnetkraft des Elektromagneten (1200) übersteigt und wobei die zweite Haltevorrichtung (560) einen Elektromagneten (1300) mit einstellbarer Magnetkraft umfasst, die so ausgestaltet ist, dass sie den zweiten Wassertank (550) von der obersten Position automatisch freigibt, wenn der zweite Wassertank (550) eine Gewichtskraft ausübt, die einer Befüllung mit einer definierten Wassermenge entspricht, die Magnetkraft des Elektromagneten (1300) übersteigt.

4. Die Vorrichtung (1) gemäß Anspruch 1, wobei die erste Haltevorrichtung (520) ein schwenkbar gelagertes Sperrelement (521) und ein an der Oberseite des ersten Wassertanks (500) befestigtes hervorstehendes Element (522) umfasst, wobei das schwenkbar gelagerte Sperrelement (521) durch ein Kontergewicht (523) in einer ersten Position gehalten wird, bei der das hervorstehende Element (522) auf dem Sperrelement (521) aufliegt, wenn der erste Wassertank (500) sich in der obersten Position befindet, und wobei das Sperrelement (521) in eine zweite Position schwenkt, bei der das hervorstehende Element (522) nicht auf dem Sperrelement (521) aufliegt, wenn das Gewicht des ersten Wassertanks (500) größer ist als das Kontergewicht (523); und wobei die zweite Haltevorrichtung (560) ein schwenkbar gelagertes Sperrelement (561) und ein an der Oberseite des zweiten Wassertanks (550) befestigtes hervorstehendes Element (562) umfasst, wobei das schwenkbar gelagerte Sperrelement (561) durch ein Kontergewicht (563) in einer ersten Position gehalten wird, bei der das hervorstehende Element (562) auf dem Sperrelement (564) aufliegt, wenn der zweite Wassertank (550) sich in der obersten Position befindet, und wobei das Sperrelement (561) in eine zweite Position schwenkt, bei der das hervorstehende Element (562) nicht auf dem Sperrelement (561) aufliegt, wenn das Gewicht des zweiten Wassertanks (550) größer ist als das Kontergewicht (563).

5. Die Vorrichtung (1) gemäß einem der Ansprüche 1 bis 4, wobei die selbstschließenden Ventile (301-304) einen Ventilsitz (310), einen Ventilteller (320), eine Ventilspindel (330) und einen Ventilspindeldom (340) umfassen und wobei die Ventile (301-304) durch eine zwischen dem Ventilspindeldom (340) und dem Ventilteller (320) befindliche Feder (350) geschlossen gehalten wird.

6. Die Vorrichtung (1) gemäß einem der Ansprüche 1 bis 5, wobei die Ventilöffnungsvorrichtungen (401-404) höhenverstellbare Stifte (411-414) aufweisen, die so geformt sind, dass sie die selbstschließenden Ventile (301-304) öffnen.

7. Die Vorrichtung (1) gemäß einem der Ansprüche 1 bis 6, wobei die Antriebseinheit (700) ferner ein Masseschwungrad (750) zur Aufnahme der bei der Abwärtsbewegung eines Wassertanks (500,550) entstehenden Kraft umfasst.

8. Die Vorrichtung (1) gemäß einem der Ansprüche 5 bis 7, wobei die Ventilöffnungsvorrichtungen (401,402) auf dem Boden des unteren Wasserreservoirs (200) einen höheren Stift (411,412) aufweisen als die Stifte (413,414) der Ventilöffnungsvorrichtungen (403,404) auf der Oberseite des ersten Wassertanks (500) und des zweiten Wassertanks (550), um sicherzustellen, dass ein Wassertank in das untere Wasserreservoir (200) schneller entleert wird als ein Wassertank am oberen Wasserreservoir (100) befüllt wird.

9. Die Vorrichtung (1) gemäß einem der Ansprüche 1 bis 8, weiter umfassend eine weitere Antriebseinheit (710), die mit dem ersten Wassertank (500) und dem zweiten Wassertank (550) gegenüber der Antriebseinheit (700) verbunden ist, um sicherzustellen, dass die Aufwärts- und Abwärtsbewegung des ersten Wassertanks (500) und des zweiten Wassertanks (550) durch die Antriebseinheit (700) gleichmäßig erfolgt.

10. Die Vorrichtung (1) gemäß einem der Ansprüche 1 bis 9, wobei die Antriebseinheit (700) folgende Bestandteile umfasst: ein mittig zwischen den Behältern des unteren Wasserreservoirs (200) angeordnetes Zahnrad (701), ein mittig zwischen den Behältern des oberen Wasserreservoirs (100) angeordnetes Zahnrad (702), eine zwischen die beiden Zahnrädern (701,702) gespannte Kette (703), die mit dem ersten Wassertank (500) und dem zweiten Wassertank (550) verbunden ist und eine Welle (704), über die das mittig zwischen den Behältern des oberen Wasserreservoirs (100) angeordnete Zahnrad (702) den Generator (800) antreibt.

11. Die Vorrichtung (1) gemäß einem der Ansprüche 1 bis 10, wobei die Antriebseinheit (700) ferner ein Wandelgetriebe (780) zur Umwandlung der periodisch alternierenden Abwärtsbewegung und Aufwärtsbewegung der Wassertanks in eine synchrone Drehbewegung umfasst und der Generator (800) mit dem Wandelgetriebe (780) verbunden ist.

12. Die Vorrichtung (1) gemäß Anspruch 11, wobei das Wandelgetriebe (780) eine Generatorwelle (781) umfasst, auf der zwei Freilaufzahnräder (782a,782b) angeordnet sind, wobei das Freilaufzahnrad (782a) über eine Kette (784a) mit einem auf der Welle (704) angeordneten Freilaufzahnrad (785a) verbunden ist, das Freilaufzahnrad (782b) über eine Kette (784b) mit einem auf einer zweiten Welle (704b) angeordnetem Freilaufzahnrad (785b) verbunden ist, wobei ein auf der Welle (704) angeordnetes Zahnrad (783a) in ein auf der zweiten Welle (704b) angeordnetes Zahnrad (783b) eingreift und wobei der Generator (800) über die Generatorwelle (781) angetrieben wird.

13. Die Vorrichtung (1) gemäß Anspruch 11, wobei das Wandelgetriebe (780) eine Generatorwelle (781) umfasst, auf der ein Freilaufzahnrad (782) und ein Zahnrad (783a) angeordnet sind, wobei das Freilaufzahnrad (782) über eine Kette (784) mit einem auf der Welle (704) angeordneten Zahnrad (783b) verbunden ist, das Zahnrad (783a) in ein auf der Welle (704) angeordnetes Freilaufzahnrad (785) eingreift und wobei der Generator (800) über die Generatorwelle (781) angetrieben wird.

14. Ein Verfahren zur Erzeugung von Strom, umfassend die Schritte:
a) Bereitstellen einer Vorrichtung (1) gemäß einem der Ansprüche 1 bis 13, wobei ein Wassertank (500) an der obersten Position ist und der andere Wassertank (550) an der untersten Position ist;
b) Befüllen des Wassertanks (500) an der obersten Position mit Wasser aus dem oberen Wasserreservoir (100) durch Öffnen des selbstschließenden Ventils (301) mittels der Ventilöffnungsvorrichtung (403);
c) Den Wassertank (500) an der obersten Position erlauben sich mittels Gravitation abwärts bis zur untersten Position durch Lösen der Haltevorrichtung (520) zu bewegen und dabei mittels der Antriebseinheit (700) den Wassertank (550) an der untersten Position aufwärts bis zur obersten Position zu ziehen und den Generator (800) zur Stromerzeugung anzutreiben,
d) Entleeren des Wassertanks (500) an der untersten Position in das untere Wasserreservoir (200) durch Öffnen des selbstschließenden Ventils (303) mittels der Ventilöffnungsvorrichtung (401).

15. Eine Windkraftanlage (900) umfassend eine Vorrichtung (1) gemäß einem der Ansprüche 1 bis 13.
